# EUROPEAN PATENT APPLICATION

(11) **EP 1 667 052 A1**
(43) Date of publication of application: **07.06.2006**
(21) Application number: 04773074.2
(22) Date of filing: 08.09.2004
(51) Int. Cl.: G06K 17/00, G06K 19/00, G06F 3/06, G06F 3/08, G06F 15/00

(54) **INFORMATION STORAGE DEVICE AND INFORMATION PROCESSING DEVICE**

(30) Priority: 11.09.2003 JP 2003319745
(71) Applicant: MATSUSHITA ELECTRIC INDUSTRIAL CO., LTD., Kadoma-shi, Osaka 571-8501 (JP)
(72) Inventor: NAKANISHI, Yoshiaki, Matsushita El. Ind. Co., Ltd, Chuo-ku, Osaka-shi, Osaka 540-6319 (JP); KIKUCHI, Takafumi, Matsushita El. Ind. Co., Ltd., Chuo-ku, Osaka-shi, Osaka 540-6319 (JP); TAKAGI, Yoshihiko, Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2004/013401
(87) International publication number: WO 2005/027029

(57) **Abstract**

The present application is to make an information storage device (card) with a plurality of communication functions perform a process by one of the communication functions in cooperation with another process performed by the other communication function. A card 30 includes contactless communication means and contact communication means so as to execute only one of a process using contactless communication and a process using contact communication at one and the same time. The card 30 further includes processing means 33 and status change means 31. The processing means 33 executes processes by contactless communication and contact communication. The status change means 31 gives a response, in terms of an execution status of a contactless communication process, when the status change means 31 receives a check request command for inquiring a condition of the contactless communication process from a card supervision portion 12 through the contact communication means. The status change means 31 sends the processing means 33 an instruction to change the process of the processing means 33 to a contact communication process if the processing means 33 is not engaging in execution of the contactless communication process when the status change means 31 receives a change request command for giving an instruction to change the process of the processing means 33 to the contact communication process from the card supervision portion 12. It is therefore possible to make the card perform the process by contact communication in cooperation with the process using contactless communication.

## Description

### <Technical Field>

The present invention relates to an information storage device such as a smart card, and information processing apparatus such as a cellular phone mounted with this information storage device so as to perform contact communication therewith.

### <Background Art>

In recent years, smart cards have been put into practical use as electronic settlement cards, commutation tickets, prepaid train tickets with pay-in function, and so on. It is expected that applications of the smart cards will expand further. There are two communication methods of the smart cards. One of the methods is contact communication using a reader/writer brought into contact with an electric contact of a smart card so as to read/write recorded information from/into the smart card. The other method is contactless communication for exchanging information by wireless communication without necessity of physical contact with a reader/writer.

Patent Document 1 (JP-A-2002-345037) discloses a configuration in which a smart card capable of performing both contact communication and contactless communication is mounted in portable communication apparatus so that reading/writing of recorded information is performed by contactless communication between the smart card and external apparatus, while the reading/writing is performed by contact communication between the smart card and the portable communication apparatus.

For example, assume that information about a prepaid train ticket has been recorded in a smart card. In this case, when portable communication apparatus mounted with the smart card is brought close to a ticket gate machine which is external apparatus, an instruction to read or rewrite information data is input from the ticket gate machine to the smart card by contactless communication. Data of the balance recorded on the smart card is updated in accordance with this instruction.

When a user operates a key of the portable communication apparatus to give an instruction to display the balance, the instruction is input from the portable communication apparatus to the smart card by contact communication. Thus, the balance information of the smart card is read out and displayed on a screen of the portable communication apparatus or output vocally from a speaker of the portable communication apparatus.

However, the process using contactless communication and the process using contact communication in this apparatus are independent of each other. Accordingly, the related-art apparatus cannot execute these processes in cooperation so that an amount charged, for example, when the apparatus passes through the ticket gate machine, is automatically displayed on the screen etc. of the portable communication apparatus.

This is because the smart card is originally configured to give a response to a command (simply give a response to an inquiry to an inquirer of the inquiry) and a signal indicating termination of the process by contactless communication cannot be spontaneously issued from the smart card to the portable communication apparatus.

### <Disclosure of the Invention>

The present invention is to solve the foregoing problem in the related art. An object of the present invention is to provide information processing apparatus which can make an information storage device with a plurality of communication functions execute a process by one of the communication functions in cooperation with another process performed by the other communication function, and an information storage device which can engage in the execution.

The present invention provides an information storage device including first communication means and second communication means for executing, at one and the same time, only one of a first process being performed in response to a process request command received from the first communication means and a second process being performed in response to a process request command received from the second communication means, the information storage device comprising processing means executing the first process and the second process, and status change means giving a response, in terms of a current execution status of a process of the processing means, when the status change means receives a check request command for inquiring a condition of the process of the processing means through the second communication means, the status change means sending the processing means an instruction to change the process of the processing means to the second process if the processing means is not engaging in execution of the first process when the status change means receives a change request command for giving an instruction to change the process of the processing means to the second process through the second communication means.

This information storage device gives a response to a check request sent through the second communication when execution of the first process has been terminated. As the current process execution status, the response indicates that the first process is not in execution or that change to the second process is possible. Thus, the information storage device directly or indirectly informs the situation that transition to the second process is possible. When a process change request is sent from the second communication means, the information storage device changes its status to a status for executing the second process. Accordingly, a result of the first process using the first communication means can be transmitted to the outside through the second communication means.

Incidentally, it is a matter of course that the status of the information storage device is not merely changed to the status for executing the "second process" when the status relating to the "first process" has been checked, but as equivalent conversion the status may be also changed to the status for executing the "first process" when the status relating to the "second process" has been checked.

In addition, in the information storage device according to the present invention, the status change means gives a response indicating that change to the second process is possible, to the check request command, if the processing means is not engaging in execution of the first process currently.

Thus, when the check request command is sent to the information storage device, it is possible to directly find out whether transition to the second process is possible or not.

In addition, in the information storage device according to the present invention, it is assumed that the first communication means is communication means for performing contactless communication and the second communication means is communication means for performing contact communication. Alternatively, it is assumed that the first communication means is communication means for performing contact communication and the second communication means is communication means for performing contactless communication.

Thus, in a smart card etc. having a contactless communication function and a contact communication function, a process using contact communication can be performed in cooperation with a process using contactless communication.

Further, the present invention provides information processing apparatus for performing communication with an information storage device through second communication means. The information storage device includes first communication means and the second communication means for executing, at one and the same time, only one of a first process being performed in response to a process request command received from the first communication means and a second process being performed in response to a process request command received from the second communication means, the information processing apparatus comprising control means controlling a processing request for the second process of the information storage device, and information storage device supervision means sending the information storage device a check request command for inquiring a condition of a process of the information storage device, and sending the information storage device a change request command for giving an instruction to change the process of the information storage device to the second process when the information storage device supervision means concludes, based on a response to the check request command, that a status of the information storage device can be changed to a status for executing the second process.

Thus, a result of the first process performed by the first communication means by the information storage device can be elicited and displayed using the second communication means.

In addition, in the information processing apparatus according to the present invention, it is assumed that the first communication means is communication means for performing contactless communication and the second communication means is communication means for performing contact communication. Alternatively, it is assumed that the first communication means is communication means for performing contact communication, and the second communication means is communication means for performing contactless communication.

Thus, a smart card etc. having a contactless communication function and a contact communication function can be used to perform a process by contact communication in cooperation with a process performed by contactless communication.

In addition, in the information processing apparatus according to the present invention, the information storage device supervision means transmits the check request repetitively to the information storage device.

Thus, termination of contactless communication of the information storage device can be detected by polling, so that change to contact communication can be executed immediately after the termination of contactless communication.

In addition, in the information processing apparatus according to the present invention, when there is a response indicating impossibility of change to the check request command from the information storage device a predetermined consecutive number of times after there is a response indicating possibility of change to the check request command from the information storage device, the information storage device supervision means concludes that the information storage device is engaging in execution of the first process. Thus, the information storage device supervision means does not transmit the change request command to the information storage device.

Thus, the time for the information storage device to start the first process can be determined correctly.

In addition, in the information processing apparatus according to the present invention, when there is a response indicating possibility of change to the check request command from the information storage device a predetermined consecutive number of times, the information storage device supervision means concludes that a status of the information storage device can be changed to a status for executing the second process. Thus, the information storage device supervision means transmits the change request command to the information storage device.

Thus, the time for allowing the information storage device to change its status to the second process can be determined correctly.

### <Brief Description of the Drawings>

Fig. 1 is a diagram for explaining tripartite communication among a user terminal, a card and a service terminal in a first embodiment of the present invention;
Fig. 2 is a block diagram showing the configurations of the user terminal and the card in the first embodiment of the present invention;
Fig. 3 is a diagram showing the configuration of a card operating portion of the card in the first embodiment of the present invention;
Fig. 4 is a flow chart of the tripartite communication in the first embodiment of the present invention;
Fig. 5 is a view for explaining an unstable section of a radio wave region of a reader/writer;
Fig. 6 is a view for explaining a radio wave undetection section of the radio wave region of the reader/writer;
Fig. 7 is a processing flow chart for determining the time when the card has plunged into contactless communication, without suffering an influence of an unstable section in a second embodiment of the present invention;
Fig. 8 is a processing flow chart for determining the time when the card has broken away from contactless communication, without suffering an influence of a radio wave undetection section in the second embodiment of the present invention; and
Fig. 9 is a processing flow chart for determining the time when the card has broken away from contactless communication, without suffering an influence of the unstable section in the second embodiment of the present invention.

Reference numerals in the drawings designate as follows.

10---user terminal; 11---terminal operating portion; 12---card supervision portion; 13---terminal command communication portion; 30---card; 31---status change portion; 32---card command communication portion; 33---card operating portion; 50---service terminal; 51---reader/writer; 61---unstable section; 62---radio wave undetection section; 70---radio wave detection section; 331---contactless communication status storage portion; 332---current status storage portion; 333---information storage portion.

### <Best Mode for Carrying Out the present invention>

Embodiments of the present invention will be described below with reference to the drawings.

### (First Embodiment)

A first embodiment of the present invention will be described in the case in which a smart card (hereinafter referred to as "card" simply) having both contact communication and contactless communication functions is mounted and used in a user terminal such as a cellular phone.

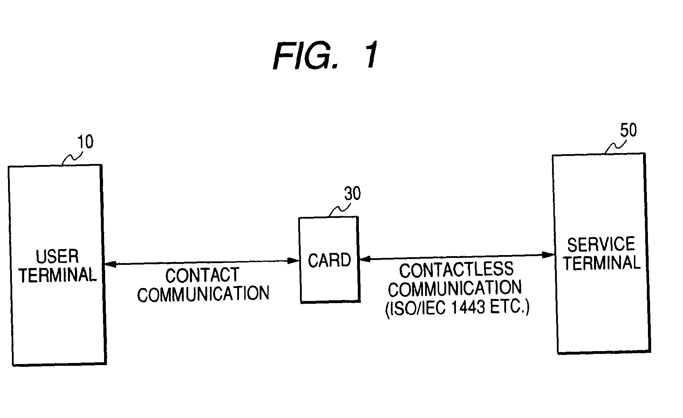

As shown in Fig. 1, this card 30 performs contact communication with a user terminal 10 and performs contactless communication complying with ISO/IEC 1443 etc. with a service terminal 50 such as a ticket gate machine.

When the card 30 mounted in the user terminal 10 receives a radio wave of the service terminal 50 which is, for example, a ticket gate machine, the card 30 starts contactless communication with the service terminal 50 so as to execute a payment process at the time of examination of a ticket. After the user terminal 10 has confirmed termination of the contactless communication of the card 30, the user terminal 10 turns on the contact communication function of the card 30, requests a result of the contactless communication process, and displays information acquired from the card 30 on a display screen etc. of the user terminal 10.

The contactless communication and the contact communication performed thus in cooperation among the user terminal 10, the card 30 and the service terminal 50 will be called "tripartite communication" here.

In the tripartite communication, when the user terminal 10 makes a request for a process, by contact communication, to the card 30 engaging in execution of a process by contactless communication, there is possibility that the process sequence in execution is destroyed or unexpected information leakage etc. occurs.

For example, when a process request command from the user terminal 10 arrives at the card 30 in the middle of a ticket examination process performed by contactless communication, there will arise a situation that the ticket examination process is suspended, a ticket examination result is not recorded in the card 30 in spite of charging for it, or the user terminal 10 is allowed to gain access to data to be read/written only by ticket gate machine authority.

Such a situation can be solved by examining status transition in tripartite communication and designing and mounting a card 30 so as to be able to deal with all the possibilities. However, it is extremely difficult to do so actually, and the cost for the design and mounting will be increased if can.

Accordingly, in this embodiment, a system in which problems hardly occur is used. To this end, specifications of a card are set as follows.
- The card cannot use a contact communication function and a contactless communication function simultaneously.
- The card cannot call the contact communication function during contactless communication (as long as the card is receiving a radio wave from a reader/writer).
- When the contact communication function is in use, the card ignores a radio wave sent by contactless communication.
- The card turns on/off the contact communication function in accordance with a changeover command.

As commands relating to this changeover to the contact communication function, two kinds of commands are set as follows.
(1) "Check command" for checking whether changeover can be performed or not, without actually performing the changeover.
(2) "Changeover command" for giving an instruction to actually perform changeover.

These two kinds of commands may be implemented by different commands, or may be distinguished from each other by arguments of one command.

When the user terminal 10 mounted with the card 30 is brought close to the service terminal 50 which is, for example, a ticket gate machine, the card 30 having received a radio wave from the service terminal 50 starts contactless communication with the service terminal 50 so as to execute a payment process at the time of examination of a ticket. The user terminal 10 uses a check command to perform polling on the card 30 so as to supervise termination of the contactless communication of the card 30.

This polling is a process for referring to information managed and updated by the card 30. The internal status of the card 30 is not changed by this polling.

When the payment process is completed and the user terminal 10 is brought away from the service terminal 50, the contactless communication with the user terminal 50 is terminated. The user terminal 10 confirms termination of the contactless communication, issues a changeover command for turning on the contact communication function of the card 30, and makes a request for a result of the contactless communication process to the card 30 whose status has changed over to a contact communication status. The user terminal 10 acquires information indicating the result of the contactless communication process from the card 30, and displays the information on a display screen etc. of the user terminal 10.

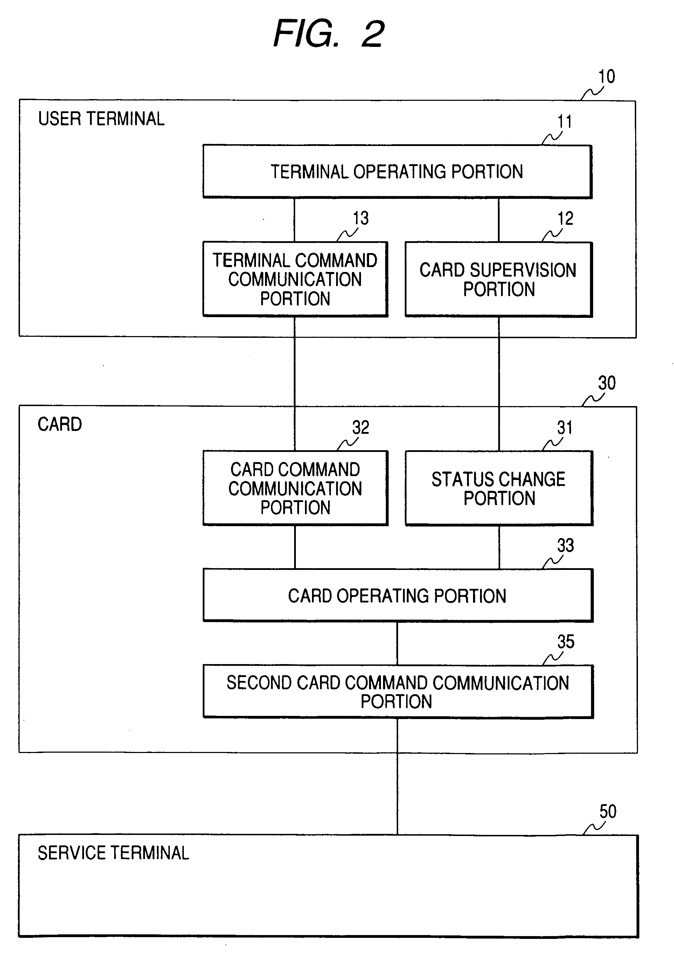

In order to execute such tripartite communication, as shown in Fig. 2, the user terminal 10 includes a terminal operating portion 11, a terminal command communication portion 13, and a card supervision portion 12. The terminal operating portion 11 performs processes of the user terminal 10 exclusively. The terminal command communication portion 13 transmits a command to the card 30 in accordance with an instruction of the terminal operating portion 11, and sends the terminal operating portion 11 a processing result received from the card 30. The card supervision portion 12 supervises the contact/contactless communication status of the card 30 and makes a request for change of the status of the card 30 to a contact or contactless communication status. The terminal operating portion 11 executes all the processes of the user terminal 10 except the processes performed by the terminal command communication portion 13 and the card supervision portion 12.

On the other hand, the card 30 includes a card operating portion 33, a card command communication portion 32 and a status change portion 31. The card operating portion 33 performs processes in the card exclusively. The card command communication portion 32 receives a command from the terminal command communication portion 13 of the user terminal 10 and sends the terminal command communication portion 13 a result of a process executed by the card operating portion 33 in accordance with the received command. The status change portion 31 gives a response to a request for checking of the contact/contactless communication status of the card 30 when the request is made by the card supervision portion 12 of the user terminal 10. The status change portion 31 gives a response to a request for change of the contact/contactless communication status when the request is made by the card supervision portion 12. The card operating portion 33 executes all the processes of the card 30 except the processes performed by the card command communication portion 32 and the status change portion 31.

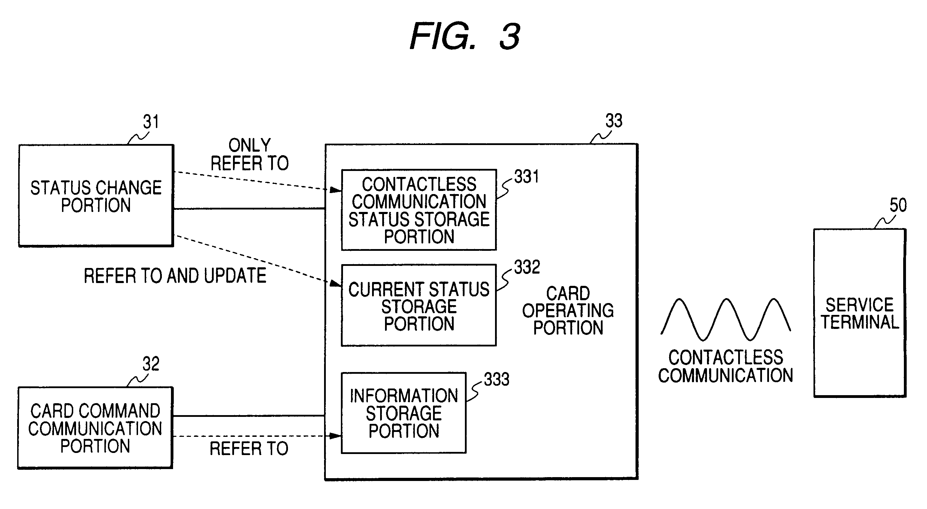

As shown in Fig. 3, the card operating portion 33 has a contactless communication status storage portion 331, a current status storage portion 332 and an information storage portion 333. The contactless communication status storage portion 331 holds information indicating a physical radio wave status of contactless communication. The current status storage portion 332 holds information indicating which status the card 30 is in, a contact communication status or a contactless communication status. The information storage portion 333 stores a result of a contactless communication process (a result of a ticket examination process, an amount charged by a POS, or the like).

When the current status of the current state storage portion 332 indicates a contactless communication status, the card operating portion 33 updates information of the contactless communication status storage portion 331 in accordance with presence/absence of a radio wave received from the service terminal 50. The status change portion 31 is allowed only to refer to the information held in the contactless communication status storage portion 331. When the status change portion 31 receives a check command for checking the possibility of changing the status of the card 30 to a contact communication status from the card supervision portion 12 of the user terminal 10, the status change portion 31 refers to the contactless communication status storage portion 331. When the contactless communication status storage portion 331 is in a status where the radio wave is absent, the status change portion 31 gives a response indicating to be possible to change. When the contactless communication status storage portion 331 is in a status where the radio wave is present, the status change portion 31 gives a response indicating to be impossible to change.

The status change portion 31 is allowed to refer to and update the information held in the current status storage portion 332. When the status change portion 31 receives a changeover command for performing changeover to contact communication from the card supervision portion 12 of the user terminal 10, the status change portion 31 refers to the information of the current status storage portion 332, and updates the status of the card 30 to a contact communication status when the current status of the card 30 is a contactless communication status. In response thereto, the card operating portion 33 executes a contact communication function.

Provided that the changeover command is received from the user terminal 10 during contactless communication (as long as a radio wave from the reader/writer is being received), the card operating portion 33 rejects the request of the user terminal 10 in accordance with a predetermined protection procedure.

The information storage portion 333 corresponds to a file inside the smart card function. The card operating portion 33 updates information of the information storage portion 333 based on the result of the contactless communication process. The card command communication portion 32 is allowed to refer to the information held in the information storage portion 333. When the card command communication portion 32 receives a command for requesting the result of the contactless communication process from the terminal command communication portion 13 of the user terminal 10, the card command communication portion 32 refers to the information of the information storage portion 333 and discloses the information. As soon as the reference information stored in the information storage portion 333 is referred to, the card operating portion 33 may autonomously regard the reference information as unnecessary and deleted/change it. Alternatively, the card operating portion 33 may delete the reference information in accordance to a deletion request sent from the user terminal 10 after reference. Further, the status when the information was referred to may be kept until the information is overwritten next time.

Provided that a command is received from the terminal command communication portion 13 of the user terminal 10 when the current status of the card 30 is a contactless communication status, the card operating portion 33 rejects a request of the user terminal 10 in accordance with the predetermined protection procedure.

The card supervision portion 12 of the user terminal 10 uses the check command to perform polling on the status change portion 31 of the card 30 which is in a contactless communication status, so as to check the possibility of changing the status of the card 30 to a contact communication status. When the terminal operating portion 11 of the user terminal 10 concludes, based on the response of the status change portion 31, that the contactless communication of the card 30 has been terminated, the terminal operating portion 11 transmits a changeover command for changing over the status to the contact communication status to the status change portion 31 through the card supervision portion 12.

On receiving this changeover command, the status change portion 31 updates the current status of the current status storage portion 332 to a contact communication status. The card 30 shifts its status from the contactless communication status to the contact communication status. The terminal operating portion 11 makes a request for the result of the contactless communication process through the terminal command communication portion 13. The card command communication portion 32 having received the request reads out information from the information storage portion 333 and sends the information to the user terminal 10. This information is displayed on a display screen etc. of the user terminal 10.

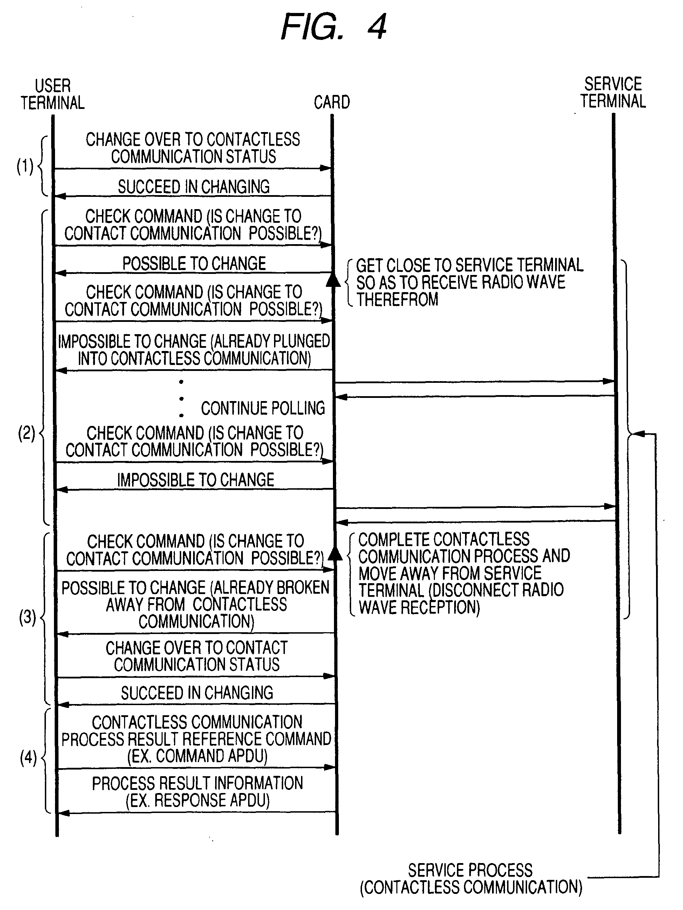

Fig. 4 shows a processing flow of the tripartite communication.
(1) After the user terminal 10 has checked the possibility of changing the status of the card 30 to a contactless communication status, the user terminal 10 sends the card 30 a changeover command for changing over the status of the card 30 to the contactless communication status. The card 30 having succeeded in changing its status to the contactless communication status sends an acknowledgement to the user terminal 10.
(2) The user terminal 10 sends a check command to the card 30, for example, at an interval of 10 msec, so as to check the possibility of changing the status of the card 30 to a contact communication status. When the user terminal 10 gets close to the service terminal 50 so as to allow the card 30 to receive a radio wave therefrom, the card 30 starts contactless communication with the service terminal 50. Before the card 30 reaches this state, the card 30 cannot receive a radio wave during the course where the user terminal 10 is getting close to the service terminal 50. The card 30 at this stage gives a response as "possible to change" to a contact communication status to the check command. Then, when the card 30 has been able to receive the radio wave and started contactless communication, the card 30 gives a response as "impossible to change" to a contact communication status to the check command. When the response to the check command changes from "possible to change" to "impossible to change", the user terminal 10 concludes that the card 30 has plunged into contactless communication. While the card 30 stores a result of a contactless communication process successively into the information storage portion 333 and continues contactless communication, the card 30 repeats the response as "impossible to change" to the check command.
(3) When the contactless communication process has been completed and the user terminal 10 is brought away from the service terminal 50, the radio wave received by the card 30 is disconnected. When the card 30 receives a check command at this stage, the card 30 gives a response as "possible to change" to a contact communication status. Due to the response as "possible to change" given by the card 30 having plunged into contactless communication, the user terminal 10 concludes that the card 30 has broken away from the contactless communication, and sends the card 30 a changeover command for changing over the status of the card 30 to a contact communication status. The card 30 having succeeded in changing its status to a contact communication status sends an acknowledgement to the user terminal 10.
(4) The user terminal 10 sends the card 30 a command for giving an instruction to refer to the result of the contactless communication process. As a response to the command, the card 30 transmits information of the result of the contactless communication process to the user terminal 10. The command and the response are generated, for example, in the format of an APDU (Application Protocol Data Unit) defined by ISO/IEC 7816-part4.

In this manner, in the tripartite communication according to the embodiment, the user terminal 10 performs polling on the card 30 for checking the possibility of changing over between contact communication and contactless communication, so as to detect the card 30 plunging into and breaking away from the contactless communication. The user terminal 10 makes a request for a contactless communication result to the card 30 as soon as the user terminal 10 confirms the card 30 has broken away from the contactless communication. In this manner, contactless communication and contact communication of the card 30 can be cooperated with each other.

### (Second Embodiment)

A second embodiment of the present invention will be described on a countermeasure against false conclusion in polling using a check command. The configurations of Figs. 1 to 3 remain unchanged in the second embodiment.

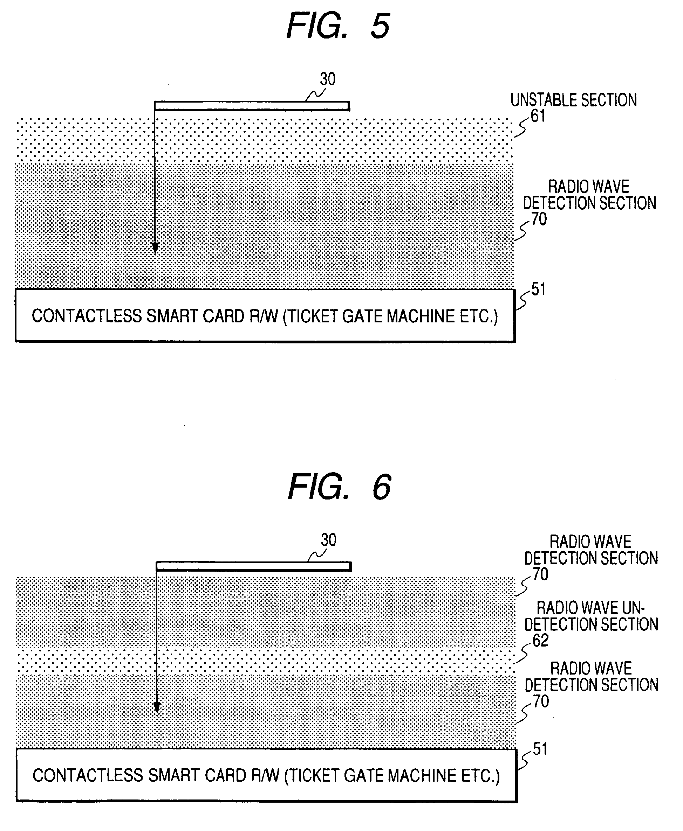

As shown in Fig. 5, an unstable section 61 in which a radio wave condition is unstable is present in a position far from a reader/writer 51 of a service terminal generating a radio wave. In order to make the card 30 perform contactless communication, it is necessary to move the card 30 to a radio wave detection section 70 just near to the reader/writer 51, as designated by the arrow, so that the card 30 can detect the radio wave stably. Before the card 30 reaches the radio wave detection section 70, the card 30 has to pass through the unstable section 61. Similarly, when contactless communication is terminated and the card 30 is brought away from the reader/writer 51, the card 30 also has to pass through the unstable section 61.

The card 30 in the unstable section 61 is so unstable that it sometimes succeeds in detecting a radio wave but it sometimes fails in doing so. For this reason, there is possibility that there may occur a situation in which the card 30 passing through the unstable section 61 detected a radio wave when it received a check command for the first time but it failed in detecting a radio wave when it received a check command the next time. Therefore, there is fear that false con-clusion is made when the status of the card is determined in immediate response to a result of the polling.

When the card 30 is brought close to the reader/writer 51, there is possibility that a radio wave undetection section 62 in which the card 30 cannot receive a radio wave is present in the middle of the radio wave detection section 70, as shown in Fig. 6. This fact has been verified by test. When the card 30 passes through this radio wave undetection section 62 in the course where the card 30 is being brought close to the reader/writer 51 or away from the reader/writer 51, the radio wave detection status changes to an undetection status. When the timing of polling is consistent with the time when the card 30 passes through the radio wave undetection section 62, there is possibility that it is falsely concluded that the contactless communication process of the card 30 has been terminated.

When a user carries and moves the user terminal 10 so as to bring the card 30 close to the reader/writer 51, the card 30 may succeed or fail in detecting a radio wave in accordance with the way the user moves the user terminal 10. For example, assume that the user moves the card 30 up/down at a high speed near a boundary between the radio wave detection section and the undetection section. Due to such a way of moving the card 30, a radio wave detected by the card 30 may appear and disappear to cause a false conclusion in polling.

In order to avoid a false conclusion caused by these reasons in the tripartite communication according to the embodiment, a change in the status of the card 30 is determined only after the same status is detected continuously by polling.

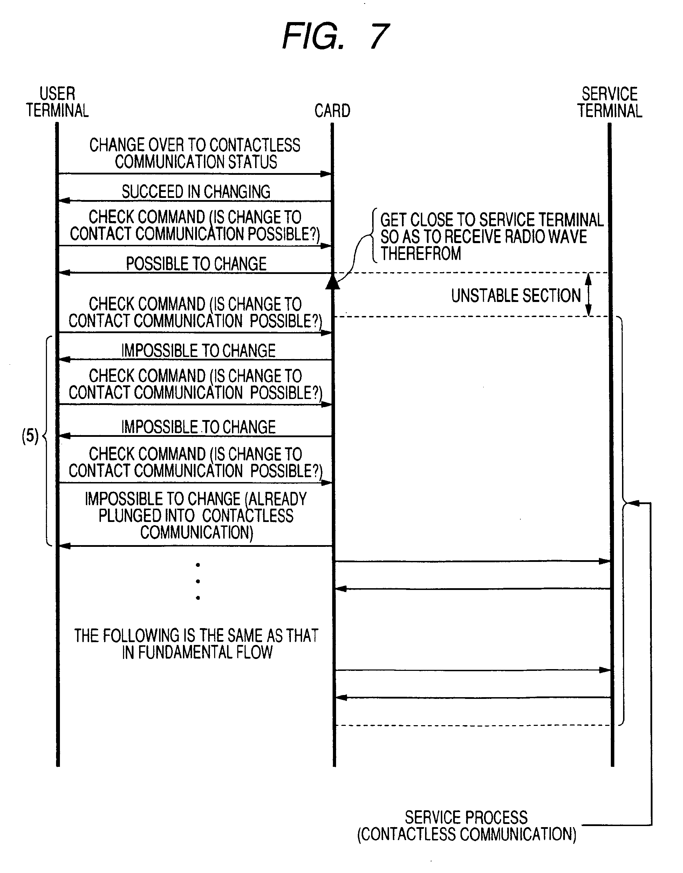

Fig. 7 shows a processing flow for determining the time when the card 30 has plunged into contactless communication.

The user terminal 10 uses a check command to perform polling on the card 30 having succeeded in changing its status to a contactless communication status, so as to check the possibility of changing the status of the card 30 to a contact communication status. The card 30 gives a response as "possible to change" to this polling until the card 30 reaches the radio wave unstable section 61. The card 30 gives a response as "possible to change" or "impossible to change" to the polling when the card 30 is passing through the unstable section 61. The card 30 gives a response as "impossible to change" to the polling continuously when the card 30 enters the radio wave detection section 70.
(5) The user terminal 10 concludes that the card 30 has plunged into contactless communication.as soon as the user terminal 10 confirms "impossible to change" consecutive N times at an interval of a time m. These values m and N are adjusted by the characteristic of the reader/writer of the service terminal 50, or the like.

The processing flow after that is the same as that in Fig. 4.

In the aforementioned manner, it is not concluded that the card 30 has plunged into contactless communication unless a response as "impossible to change" is obtained stably over a fixed time. Thus, it is possible to prevent false detection.

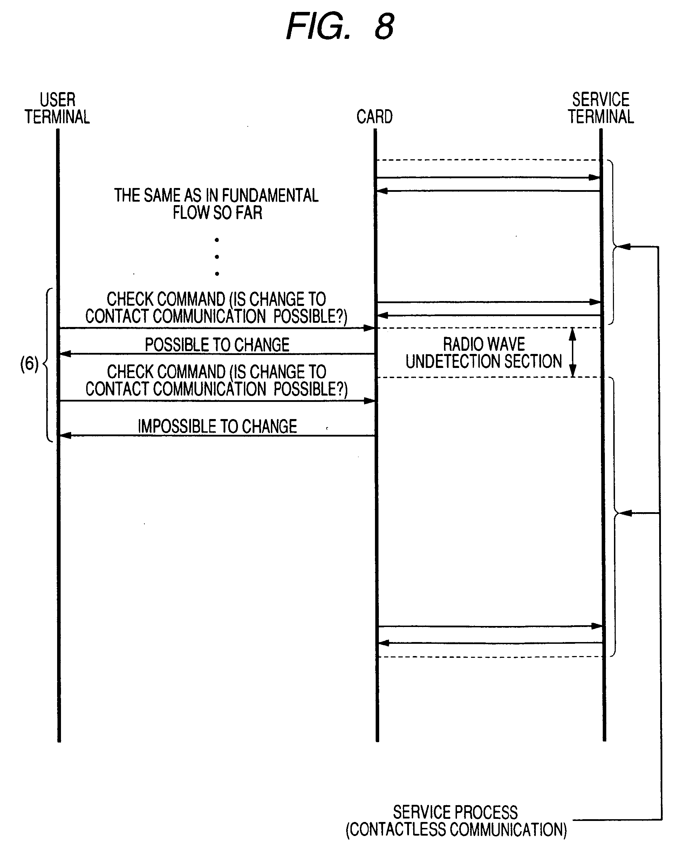

Fig. 8 shows a processing flow for determining the time when the card 30 has broken away from contactless communication, without suffering an influence of the radio wave undetection section 62.

The user terminal 10 uses a check command to perform polling on the card 30 having plunged into contactless communication, so as to check possibility of changing the status of the card 30 to a contact communication status.
(6) The card 30 may give a response as "possible to change" to the check command when the card 30 passes through the radio wave undetection section 62. Only by the response, the user terminal 10 does not conclude that the card 30 has broken away from contactless communication. Only after the response has been received a plurality of times, the user terminal 10 determines the time when the card 30 has broken away from contactless communication.

In the aforementioned manner, it is not concluded that the card 30 has broken away from contactless communication unless a response as "possible to change" is obtained stably over a fixed time. Thus, it is possible to prevent false detection caused by the presence of the radio wave undetection section 62.

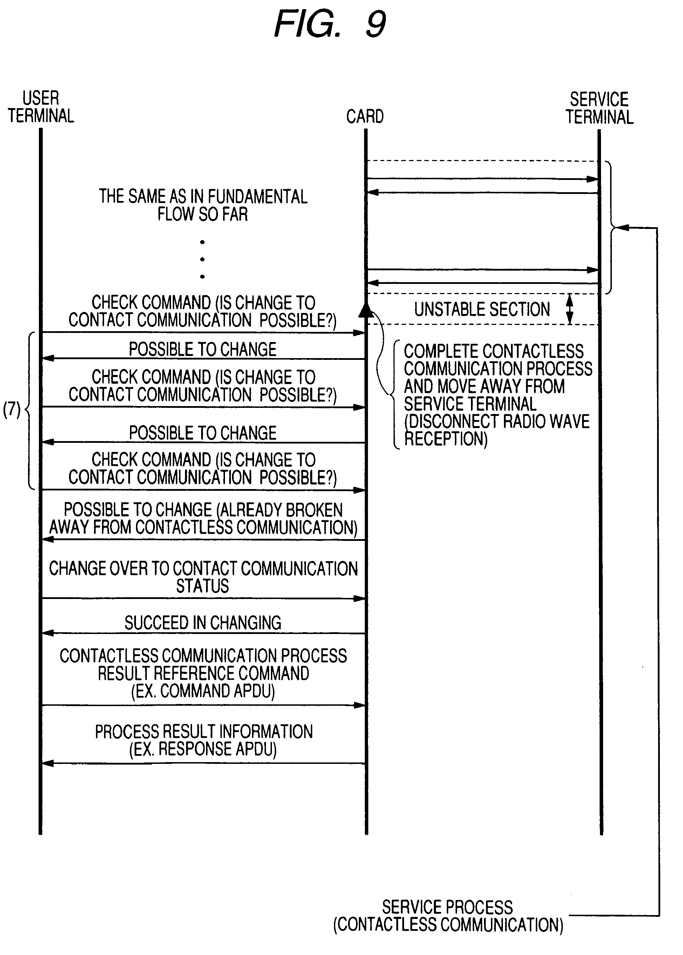

Fig. 9 shows a processing flow for determining the time when the card 30 has broken away from contactless communication, without suffering an influence of the unstable section 61.

The user terminal 10 uses a check command to perform polling on the card 30 having plunged into contactless communication, so as to check possibility of changing the status of the card 30 to a contact communication status.
(7) The user terminal 10 concludes that the card 30 has broken away from the contactless communication as soon as the user terminal 10 confirms "possible to change" consecutive N times at an interval of a time m. These values m and N are adjusted by the characteristic of the reader/writer of the service terminal 50, or the like.

The processing flow after that is the same as that in Fig. 4.

In the aforementioned manner, it is not concluded that the card 30 has broken away from contactless communication unless a response as "possible to change" is obtained stably over a fixed time. Thus, it is possible to prevent false detection caused by the presence of the unstable section 61.

Although the present invention has been described above in detail and with reference to its specific embodiments, it is obvious to those skilled in the art that various changes or modifications can be made without departing from the spirit and scope of the present invention.

The present application is based on a Japanese patent application filed on September 11, 2003 (Japanese Patent Application No. 2003-319745), the contents of which are incorporated herein by reference.

### <Industrial Applicability>

An information storage device according to the present invention is applicable to a smart card, various kinds of secure devices, etc. In addition, information processing apparatus according to the present invention is applicable to various information processing terminals such as a cellular phone, a PHS (Personal Handy-phone System), a PDA (Personal Digital Assistant), a communication function-including portable type personal computer, etc. each of which is mounted with this information storage device.

The information processing apparatus according to the present invention can make the information storage device with a plurality of communication functions perform a process using one of the communication functions in cooperation with another process using the other communication function. Further, the information storage device according to the present invention can execute a process requested by this information processing apparatus.

Therefore, for example, an information storage device with a contactless communication function and a contact communication function can perform a ticket examination process by contactless communication, and transmit information of a charged amount to information processing apparatus by contact communication. The information processing apparatus can display this information.

According to the present invention, processes working with each other in the information storage device are set in such a manner that the both communication functions are not allowed to be used simultaneously in order to prevent any problems from occurring. Thus, it is easy to design and mount the information storage device.

## Claims

1. An information storage device including first communication means and second communication means for executing, at one and the same time, only one of a first process being performed in response to a process request command received from the first communication means and a second process being performed in response to a process request command received from the second communication means, comprising:
processing means executing the first process and the second process; and
status change means giving a response, in terms of a current execution status of a process of the processing means, when the status change means receives a check request command for inquiring a condition of the process of the processing means through the second communication means, the status change means sending the processing means an instruction to change the process of the processing means to the second process if the processing means is not engaging in execution of the first process when the status change means receives a change request command for giving an instruction to change the process of the processing means to the second process through the second communication means.

2. The information storage device according to claim 1, wherein the status change means gives a response indicating that the process of the processing means can be changed to the second process, to the check request command, if the processing means is not engaging in execution of the first process currently.

3. The information storage device according to claim 1 or 2,
wherein the first communication means is communication means for performing contactless communication, and
wherein the second communication means is communication means for performing contact communication.

4. The information storage device according to claim 1 or 2,
wherein the first communication means is communication means for performing contact communication, and
wherein the second communication means is communication means for performing contactless communication.

5. An information processing apparatus for performing communication with an information storage device through second communication means, the information storage device including first communication means and the second communication means for executing, at one and the same time, only one of a first process being performed in response to a process request command received from the first communication means and a second process being performed in response to a process request command received from the second communication means, comprising:
control means controlling a processing request for the second process of the information storage device; and
information storage device supervision means sending the information storage device a check request command for inquiring a condition of a process of the information storage device, and sending the information storage device a change request command for giving an instruction to change the process of the information storage device to the second process when the information storage device supervision means concludes, based on a response to the check request command, that a status of the information storage device can be changed to a status For executing the second process.

6. The information processing apparatus according to claim 5,
wherein the first communication means is communication means for performing contactless communication, and
wherein the second communication means is communication means for performing contact communication.

7. The information processing apparatus according to claim 5,
wherein the first communication means is communication means for performing contact communication, and
wherein the second communication means is communication means for performing contactless communication.

8. The information processing apparatus according to claim 5, 6 or 7, wherein the information storage device supervision means transmits the check request command repetitively to the information storage device.

9. The information processing apparatus according to claim 8, wherein, when there is a response indicating impossibility of change to the check request command from the information storage device a predetermined consecutive number of times after there is a response indicating possibility of change to the check request command from the information storage device, the information storage device supervision means concludes that the information storage device is engaging in execution of the first process, so as not to transmit the change request command to the information storage device.

10. The information processing apparatus according to claim 8, wherein, when there is a response indicating possibility of change to the check request command from the information storage device a predetermined consecutive number of times, the information storage device supervision means concludes that a status of the information storage device can be changed to a status for executing the second process, so as to transmit the change request command to the information storage device.
